# EUROPEAN PATENT APPLICATION

(11) **EP 4 645 990 A1**
(43) Date of publication of application: **05.11.2025**
(21) Application number: 23910327.8
(22) Date of filing: 21.12.2023
(51) Int. Cl.: H04W 72/20

(54) **COMMUNICATION METHOD AND COMMUNICATION APPARATUS**

(30) Priority: 29.12.2022 CN 202211709204
(71) Applicant: Beijing Unisoc Communications Technology Co., Ltd, Beijing 100083 (CN)
(72) Inventor: WANG, Hualei, Beijing 100083 (CN)
(74) Representative: Mewburn Ellis LLP
(86) International application number: PCT/CN2023/140527
(87) International publication number: WO 2024/140399

(57) **Abstract**

Embodiments of the present disclosure disclose a communication method and a communication apparatus. The method includes the following. First information is sent, where the first information is used for requesting a network device to send or configure a first reference signal. In embodiments of the present disclosure, the first information used for requesting the network device to send the first reference signal is sent, such that it is possible to actively request the network device to send the first reference signal. In this way, compared with passively receiving a reference signal sent by the network device, a required reference signal can be obtained more timely, instead of passively waiting for transmission from the network device. The first information used for requesting the network device to send the first reference signal is sent, such that the network device can configure the first reference signal according to the first information, thereby more flexibly meeting the needs of different terminals.

## Description

### CROSS-REFERENCE TO RELATED APPLICATION(S)

This application claims priority to and the benefit of Chinese Patent Application No. 202211709204.3, filed December 29, 2022 and entitled "COMMUNICATION METHOD AND COMMUNICATION APPARATUS", the entire disclosure of which is hereby incorporated by reference.

### TECHNICAL FIELD

This disclosure relates to the field of communication, in particular to a communication method and a communication apparatus.

### BACKGROUND

The 3rd generation partnership project (3GPP) R18 is considering artificial intelligence (Al)/machine learning (ML)-enabled air interface technologies, for example, AI/ML-enabled channel state information (CSI) compression and recovery, AI/ML-enabled CSI prediction, AI/ML-enabled beam prediction, and AI/ML-enabled positioning technologies. However, there is currently no specific solution for how to configure related resources.

### SUMMARY

The present disclosure discloses a communication method and a communication apparatus, which can meet the requirements of different terminals for reference signals by configuring or sending different reference signals to different terminals.

In a first aspect, embodiments of the present disclosure provide a communication method. The method includes the following. First information is sent, where the first information is used for requesting a network device to send or configure a first reference signal.

In embodiments of the present disclosure, the first information used for requesting the network device to send the first reference signal is sent, such that it is possible to actively request the network device to send the first reference signal. In this way, compared with passively receiving a reference signal sent by the network device, a required reference signal can be obtained more timely, instead of passively waiting for transmission from the network device. The first information used for requesting the network device to send the first reference signal is sent, such that the network device can configure the first reference signal according to the first information, thereby more flexibly meeting the needs of different terminals.

In a possible embodiment, the first information includes request information, and the request information is used for requesting the network device to send or configure the first reference signal.

In this embodiment, the first information includes the request information, such that the network device sends or configures the first reference signal based on the request information.

In a possible embodiment, the first information includes a reference signal resource identifier, and the reference signal resource identifier is used for identifying a resource for the first reference signal.

In this embodiment, the first information includes the reference signal resource identifier, such that the network device occupies a resource identified by the reference signal resource identifier, to send the first reference signal or to configure the resource identified by the reference signal resource identifier for the first reference signal.

In a possible embodiment, the first information includes a reference signal port number, and the reference signal port number is the number of ports for the first reference signal.

In this embodiment, the first information includes the reference signal port number, such that the network device configures or sends the first reference signal according to the reference signal port number.

In a possible embodiment, the first information includes window length information, and the window length information indicates a length of a transmission window for the first reference signal expected by a terminal.

In this embodiment, the first information includes window length information, such that the network device sends or configures the first reference signal according to the length of the transmission window indicated by the window length information.

In a possible embodiment, the first information is sent as follows. The first information is sent through a physical random access channel (PRACH).

In this embodiment, the first information is sent through the PRACH, and there is no need to request the network device to schedule resources, thereby saving signalling overhead.

In a possible embodiment, the first information is sent as follows. The first information is sent at a PRACH occasion (RO) of the PRACH, where the RO is configured by the network device or specified by the protocol for a function, i.e., the terminal sends information, such as the first information, for requesting the network device to send or configure the reference signal.

In this embodiment, the RO is configured by the network device or specified by the protocol for the function, thereby preventing occupancy of other ROs.

In a possible embodiment, the first information is carried in a message containing a preamble, where the preamble is configured by the network device or specified by the protocol for the function, that is, the terminal sends the information, such as the first information, for requesting the network device to send or configure the reference signal.

In this embodiment, the preamble is configured by the network device or specified by the protocol for the function, thereby preventing occupancy of other ROs.

In a possible embodiment, the first information is contained in message A (MsgA). Optionally, MsgA is carried on a physical uplink shared channel (PUSCH).

In this embodiment, the first information is contained in MsgA, and there is no need to request the network device to schedule resources, thereby saving signalling overhead.

In a possible embodiment, the first information is sent as follows. The first information is sent through a physical uplink control channel (PUCCH).

Optionally, PUCCH resources occupied by the first information are configured by the network device or specified by the protocol for the function, that is, the terminal sends the information, such as the first information, for requesting the network device to send or configure the reference signal.

Optionally, medium access control control element (MAC CE) information carried by the PUCCH resources occupied by the PUCCH contains the first information.

Optionally, the PUCCH resources occupied by the PUCCH carry the first information.

In a possible embodiment, the first information is sent as follows. The first information is sent through the PUSCH.

Optionally, PUSCH resources occupied by the PUSCH are configured by the network device or specified by the protocol for the function, that is, the terminal sends the information, such as the first information, for requesting the network device to send or configure the reference signal.

Optionally, the MAC CE information carried by the PUSCH resources occupied by the PUSCH contains the first information.

Optionally, the PUSCH resources occupied by the PUSCH carry the first information.

In a possible embodiment, the first information is contained in the MAC CE information.

In a possible embodiment, before the first information is sent, the method includes the following. A scheduling request (SR) is sent through the PUCCH. The first information is sent as follows. The first information is sent based on PUSCH resources scheduled by the network device.

In a possible embodiment, the number of ports for the first reference signal is greater than 2.

In a possible embodiment, the first reference signal is a channel state information-reference signal (CSI-RS) or a synchronization signal block (SSB), and the first reference signal is not associated with a CSI report configuration (CSI-ReportConfig). The first reference signal may also be other reference signals, which are not limited in the present disclosure.

In this embodiment, the terminal requests the network device to configure the first reference signal according to needs of the terminal.

In a possible embodiment, the first reference signal is the CSI-RS or the SSB, and the first reference signal is associated with the CSI report configuration. A report quantity (reportQuantity) in the CSI report configuration is configured as none or a target identifier. The target identifier indicates that a measurement result reported by a terminal is required to contain indication information. The indication information indicates model update, model deactivation, model switching, model activation, or model fallback. The target identifier may be *R, T, S, W,* etc., which is not limited in the present disclosure.

In this embodiment, the terminal requests the network device to configure the first reference signal according to the needs of the terminal.

In a possible embodiment, the method further includes the following. Measurement is performed based on a measurement resource prior to a CSI reference resource.

In a second aspect, embodiments of the present disclosure provide another communication method. The method includes the following. First information is received, where the first information is used for requesting a network device to send or configure a first reference signal. In embodiments of the present disclosure, the first information is received, such that reference signals can be specifically sent to or configured for different terminals, thereby more flexibly meeting the needs of different terminals.

In a possible embodiment, the method further includes the following. The first reference signal is sent or configured based on the first information.

In this embodiment, the first reference signal is sent or configured based on the first information, such that reference signals can be specifically sent to or configured for different terminals, thereby more flexibly meeting the needs of different terminals.

In a possible embodiment, the first information is used for configuring the first reference signal, and the number of ports for the first reference signal is greater than 2.

In a possible embodiment, the first information is used for configuring the first reference signal, the first reference signal is a CSI-RS or an SSB, and the first reference signal is not associated with a CSI report configuration.

In a possible embodiment, the first information is used for configuring the first reference signal, the first reference signal is a CSI-RS or an SSB, and the first reference signal is associated with a CSI report configuration. A report quantity in the CSI report configuration is configured as none or a target identifier. The target identifier indicates that a measurement result reported by a terminal is required to contain indication information. The indication information indicates model update, model deactivation, model activation, model switching, or model fallback.

In a possible embodiment, the first information includes request information, and the request information is used for requesting the network device to send or configure the first reference signal.

In this embodiment, the first information includes the request information, such that the network device sends or configures the first reference signal based on the request information.

In a possible embodiment, the first information includes a reference signal resource identifier, and the reference signal resource identifier is used for identifying a resource for the first reference signal.

In this embodiment, the first information includes the reference signal resource identifier, such that the network device occupies a resource identified by the reference signal resource identifier, to send the first reference signal or to configure the resource identified by the reference signal resource identifier for the first reference signal.

In a possible embodiment, the first information includes a reference signal port number, and the reference signal port number is the number of ports for the first reference signal.

In this embodiment, the first information includes the reference signal port number, such that the network device configures or sends the first reference signal according to the reference signal port number.

In a possible embodiment, the first information includes window length information, and the window length information indicates a length of a transmission window for the first reference signal expected by the terminal.

In this embodiment, the first information includes window length information, such that the network device sends or configures the first reference signal according to the length of the transmission window indicated by the window length information.

In a third aspect, embodiments of the present disclosure provide another communication method. The method includes the following. A first reference signal is configured for a terminal, and the number of ports for the first reference signal is greater than 2. The first reference signal is not associated with a CSI report configuration. Alternatively, the first reference signal is associated with the CSI report configuration. A report quantity in the CSI report configuration is configured as none or a target identifier. The target identifier indicates that a measurement result reported by the terminal is required to contain indication information. The indication information indicates model update, model deactivation, model activation, model switching, or model fallback. The reference signal is used for a measurement by the terminal. The first reference signal is configured for the terminal, which may mean that a network device configures the first reference signal for the terminal. The first reference signal is configured for the terminal, which may also mean that the terminal is configured with the first reference signal. In embodiments of the present disclosure, the network device may configure different reference signals for different terminals, to meet the requirements of different terminals for reference signals.

In embodiments of the present disclosure, the first reference signal is configured for the terminal. The reference signals are specifically configured for different terminals, thereby more flexibly meeting the needs of different terminals.

In a possible embodiment, the method further includes the following. First information is received, where the first information is used for requesting the network device to configure the first reference signal for the terminal.

In a possible embodiment, the method further includes the following. The first reference signal is sent.

In a fourth aspect, embodiments of the present disclosure provide another communication method. The method includes the following. A first reference signal is sent to a terminal, and the number of ports for the first reference signal is greater than 2. The first reference signal is not associated with a CSI report configuration. Alternatively, the first reference signal is associated with the CSI report configuration. A report quantity in the CSI report configuration is configured as none or a target identifier. The target identifier indicates that a measurement result reported by the terminal is required to contain indication information. The indication information indicates model update, model deactivation, model activation, model switching, or model fallback. The reference signal is used for a measurement by the terminal. The first reference signal is configured for the terminal, which may mean that a network device configures the first reference signal for the terminal. In embodiments of the present disclosure, the network device may send different reference signals to different terminals, to meet the requirements of different terminals for reference signals.

In embodiments of the present disclosure, the first reference signal is sent to the terminal. Different reference signals may be sent to different terminals, thereby more flexibly meeting the needs of different terminals.

In a possible embodiment, the method further includes the following. First information is received, where the first information is used for requesting the network device to send the first reference signal for the terminal.

In a fifth aspect, embodiments of the present disclosure provide a communication apparatus. The communication apparatus has functions of implementing the operations of the method embodiments in the first aspect. These functions may be implemented through hardware, or may be implemented by executing corresponding software through hardware. The hardware or software includes one or more modules corresponding to the above functions. In a possible embodiment, the communication apparatus includes a sending unit. The sending unit is configured to send first information, where the first information is used for requesting a network device to send or configure a first reference signal.

In a possible embodiment, the communication apparatus further includes a processing unit. The processing unit is configured to generate the first information.

In a possible embodiment, the first information includes request information, and the request information is used for requesting the network device to send or configure the first reference signal.

In a possible embodiment, the first information includes a reference signal resource identifier, and the reference signal resource identifier is used for identifying a resource for the first reference signal.

In a possible embodiment, the first information includes a reference signal port number, and the reference signal port number is the number of ports for the first reference signal.

In a possible embodiment, the first information includes window length information, and the window length information indicates a length of a transmission window for the first reference signal expected by a terminal.

In a possible embodiment, the sending unit is specifically configured to send the first information through a PRACH.

In a possible embodiment, the sending unit is specifically configured to send the first information at an RO of the PRACH, where the RO is configured by the network device or specified by the protocol for a function, i.e., the terminal sends information, such as the first information, for requesting the network device to send or configure the reference signal.

In a possible embodiment, the first information is carried in a message containing a preamble, where the preamble is configured by the network device or specified by the protocol for the function, that is, the terminal sends the information, such as the first information, for requesting the network device to send or configure the reference signal.

In a possible embodiment, the first information is contained in MsgA, i.e., message A. Optionally, MsgA is carried on a PUSCH.

In a possible embodiment, the sending unit is specifically configured to send the first information through a PUCCH.

Optionally, PUCCH resources occupied by the first information are configured by the network device or specified by the protocol for the function, that is, the terminal sends the information, such as the first information, for requesting the network device to send or configure the reference signal.

Optionally, MAC CE information carried by the PUCCH resources occupied by the PUCCH contains the first information.

Optionally, the PUCCH resources occupied by the PUCCH carry the first information.

In a possible embodiment, the sending unit is specifically configured to send the first information through a PUSCH.

Optionally, PUSCH resources occupied by the PUSCH are configured by the network device or specified by the protocol for the function, that is, the terminal sends the information, such as the first information, for requesting the network device to send or configure the reference signal.

Optionally, MAC CE information carried by the PUSCH resources occupied by the PUSCH contains the first information.

Optionally, the PUSCH resources occupied by the PUSCH carry the first information.

In a possible embodiment, the first information is contained in the MAC CE information.

In a possible embodiment, the sending unit is further configured to send an SR through the PUCCH. The sending unit is specifically configured to send the first information based on PUSCH resources scheduled by the network device.

In a possible embodiment, the number of ports for the first reference signal is greater than 2.

In a possible embodiment, the first reference signal is a CSI-RS or an SSB, and the first reference signal is not associated with a CSI report configuration. The first reference signal may also be other reference signals, which are not limited in the present disclosure.

In a possible embodiment, the first reference signal is the CSI-RS or the SSB, and the first reference signal is associated with the CSI report configuration. A report quantity (e.g., reportQuantity) in the CSI report configuration is configured as none or a target identifier. The target identifier indicates that a measurement result reported by a terminal is required to contain indication information. The indication information indicates model update, model deactivation, model activation, model switching, or model fallback. The target identifier may be *R, T, S, W,* etc., which is not limited in the present disclosure.

In a possible embodiment, the processing unit is further configured to perform measurement based on a measurement resource prior to a CSI reference resource.

For technical effects brought about by the fifth aspect or various optional embodiments, reference may be made to the introduction of the technical effects of the first aspect or corresponding embodiments.

In a sixth aspect, embodiments of the present disclosure provide a communication apparatus. The communication apparatus has functions of implementing the operations of the method embodiments in the second aspect. These functions may be implemented through hardware, or may be implemented by executing corresponding software through hardware. The hardware or software includes one or more modules corresponding to the above functions. In a possible embodiment, the communication apparatus includes a receiving unit. The receiving unit is configured to receive first information, where the first information is used for requesting a network device to send or configure a first reference signal.

In a possible embodiment, the communication apparatus further includes a sending unit. The sending unit is configured to send or configure the first reference signal based on the first information.

In a possible embodiment, the first information is used for configuring the first reference signal, and the number of ports for the first reference signal is greater than 2.

In a possible embodiment, the first information is used for configuring the first reference signal, the first reference signal is a CSI-RS or an SSB, and the first reference signal is not associated with a CSI report configuration.

In a possible embodiment, the first information is used for configuring the first reference signal, the first reference signal is a CSI-RS or an SSB, and the first reference signal is associated with a CSI report configuration. A report quantity in the CSI report configuration is configured as none or a target identifier. The target identifier indicates that a measurement result reported by a terminal is required to contain indication information. The indication information indicates model update, model deactivation, model activation, model switching, or model fallback.

In a possible embodiment, the first information includes request information, and the request information is used for requesting the network device to send or configure the first reference signal.

In a possible embodiment, the first information includes a reference signal resource identifier, and the reference signal resource identifier is used for identifying a resource for the first reference signal.

In a possible embodiment, the first information includes a reference signal port number, and the reference signal port number is the number of ports for the first reference signal.

In a possible embodiment, the first information includes window length information, and the window length information indicates a length of a transmission window for the first reference signal expected by the terminal.

For technical effects brought about by the sixth aspect or various optional embodiments, reference may be made to the introduction of the technical effects of the second aspect or corresponding embodiments.

In a seventh aspect, embodiments of the present disclosure provide a communication apparatus. The communication apparatus has functions of implementing the operations of the method embodiments in the third aspect. These functions may be implemented through hardware, or may be implemented by executing corresponding software through hardware. The hardware or software includes one or more modules corresponding to the above functions. In a possible embodiment, the communication apparatus includes a processing unit. The processing unit is configured to configure a first reference signal for a terminal, and the number of ports for the first reference signal is greater than 2. The first reference signal is not associated with a CSI report configuration. Alternatively, the first reference signal is associated with the CSI report configuration. A report quantity in the CSI report configuration is configured as none or a target identifier. The target identifier indicates that a measurement result reported by the terminal is required to contain indication information. The indication information indicates model update, model deactivation, model activation, model switching, or model fallback. The reference signal is used for a measurement by the terminal. The first reference signal is configured for the terminal, which may mean that a network device configures the first reference signal for the terminal. The first reference signal is configured for the terminal, which may also mean that the terminal is configured with the first reference signal. In embodiments of the present disclosure, the network device may configure different reference signals for different terminals, to meet the requirements of different terminals for reference signals.

In a possible embodiment, the communication apparatus further includes a receiving unit. The receiving unit is configured to receive first information, where the first information is used for requesting the network device to configure the first reference signal for the terminal.

In a possible embodiment, the sending unit is further configured to send the first reference signal.

For technical effects brought about by the seventh aspect or various optional embodiments, reference may be made to the introduction of the technical effects of the third aspect or corresponding embodiments.

In an eighth aspect, embodiments of the present disclosure provide another communication apparatus. The communication apparatus has functions of implementing the operations of the method embodiments in the fourth aspect. These functions can be implemented through hardware, or can also be implemented by executing corresponding software through hardware. The hardware or software includes one or more modules corresponding to the above functions. In a possible embodiment, the communication apparatus includes a sending unit. The sending unit is configured to send a first reference signal to a terminal, and the number of ports for the first reference signal is greater than 2. The first reference signal is not associated with a CSI report configuration. Alternatively, the first reference signal is associated with the CSI report configuration. A report quantity in the CSI report configuration is configured as none or a target identifier. The target identifier indicates that a measurement result reported by the terminal is required to contain indication information. The indication information indicates model update, model deactivation, model activation, model switching, or model fallback. The reference signal is used for a measurement by the terminal. The first reference signal is configured for the terminal, which may mean that a network device configures the first reference signal for the terminal.

In a possible embodiment, the communication apparatus further includes a receiving unit. The receiving unit is configured to receive first information, where the first information is used for requesting the network device to send the first reference signal for the terminal.

For technical effects brought about by the eighth aspect or various optional embodiments, reference may be made to the introduction of the technical effects of the fourth aspect or corresponding embodiments.

In a ninth aspect, the present disclosure provides a communication apparatus. The communication apparatus includes a processor. The processor is configured to execute computer execution instructions stored in a memory, is operable to perform the method in the first aspect and any possible embodiment thereof, or perform the method in the second aspect and any possible embodiment thereof, or perform the method in the third aspect and any possible embodiment thereof, or perform the method in the fourth aspect and any possible embodiment thereof.

In embodiments of the present disclosure, during execution of the above method, a process of sending information in the above method can be understood as a process of outputting information based on an instruction from the processor. When outputting information, the processor outputs the information to a transceiver for transmission. After the information is outputted by the processor, the information may undergo other processing before reaching the transceiver. Similarly, when the processor receives input information, the transceiver receives the information and inputs the information into the processor. Further, after the transceiver receives the information, the information may undergo other processing before being inputted into the processor.

For the operations involved in the processor such as sending and/or receiving, if there is no special explanation or these operations do not conflict with their actual function or internal logic in the relevant description, these operations can be generally understood as instruction output based on the processor.

In an embodiment process, the processor may be a processor specifically designed to execute these methods, or may be a processor configured to execute these methods by executing computer instructions in a memory, such as a general-purpose processor. For example, the processor may also be configured to execute programs stored in the memory. The programs, when executed, cause the communication apparatus to perform the method in the first aspect and any possible embodiment thereof.

In an embodiment, the memory is located outside the communication apparatus.

In an embodiment, the memory is located within the communication apparatus.

In embodiments of the present disclosure, the processor and the memory may also be integrated into one device, that is, the processor and the memory may also be integrated together.

In an embodiment, the communication apparatus further includes a transceiver. The transceiver is configured to receive or send a message.

In a tenth aspect, the present disclosure provides a communication apparatus. The communication apparatus includes a processing circuit and an interface circuit. The interface circuit is configured to obtain data or output data. The processing circuit is configured to perform the corresponding method in the first aspect and any possible embodiment thereof, or perform the corresponding method in the second aspect and any possible embodiment thereof, or perform the corresponding method in the third aspect and any possible embodiment thereof, or perform the corresponding method in the fourth aspect and any possible embodiment thereof.

In an eleventh aspect, the present disclosure provides a computer-readable storage medium. The computer-readable storage medium is configured to store a computer program which, when run on a computer, is operable to perform the method in the first aspect and any possible embodiment thereof, or perform the method in the second aspect and any possible embodiment thereof, or perform the method in the third aspect and any possible embodiment thereof, or perform the method in the fourth aspect and any possible embodiment thereof.

In a twelfth aspect, the present disclosure provides a computer program product. The computer program product comprises a computer program or computer codes which, when run on a computer, are operable to perform the method in the first aspect and any possible embodiment thereof, or perform the method in the second aspect and any possible embodiment thereof, or perform the method in the third aspect and any possible embodiment thereof, or perform the method in the fourth aspect and any possible embodiment thereof.

In a thirteenth aspect, the present disclosure provides a communication system. The communication system includes a user equipment (UE) as illustrated in the first aspect or any possible embodiment of the first aspect and the network device as illustrated in the second aspect or any possible embodiment of the second aspect.

In a fourteenth aspect, the present disclosure provides a chip. The chip includes a processor and a communication interface. The processor is configured to read, through the communication interface, instructions stored in a memory, to perform the method in any one of the first aspect to the fourth aspect.

### BRIEF DESCRIPTION OF THE DRAWINGS

In order to more clearly illustrate technical solutions of embodiments of the present disclosure or background, the following will give a brief introduction of accompanying drawings used for illustrating embodiments of the present disclosure or background.
FIG. 1 is a schematic diagram of an architecture of a communication system provided in the present disclosure.
FIG. 2 is a flowchart illustrating a communication method provided in embodiments of the present disclosure.
FIG. 3 is a flowchart illustrating another communication method provided in embodiments of the present disclosure.
FIG. 4 is an interaction flowchart illustrating a communication method provided in embodiments of the present disclosure.
FIG. 5 is a flowchart illustrating another communication method provided in embodiments of the present disclosure.
FIG. 6 is a flowchart illustrating another communication method provided in embodiments of the present disclosure.
FIG. 7 is a schematic structural diagram of a communication apparatus provided in embodiments of the present disclosure.
FIG. 8 is a schematic structural diagram of another communication apparatus provided in embodiments of the present disclosure.
FIG. 9 is a schematic structural diagram of another communication apparatus provided in embodiments of the present disclosure.
FIG. 10 is a schematic structural diagram of another communication apparatus provided in embodiments of the present disclosure.
FIG. 11 is a schematic structural diagram of another communication apparatus 110 provided in embodiments of the present disclosure.
FIG. 12 is a schematic structural diagram of another communication apparatus 120 provided in embodiments of the present disclosure.

### DETAILED DESCRIPTION

The terms "first", "second", etc., used in specification, claims, and accompanying drawings of embodiments of the present disclosure are used to distinguish different objects rather than describe a particular order or sequence. It may be understood that, various numerical numbers involved in embodiments of the present disclosure are only intended for distinction for the convenience of illustration, rather than limiting the scope of embodiments of the present disclosure. The magnitude of a sequence number of each of the foregoing processes does not imply an execution order, and the execution order between the processes shall be determined according to function and internal logic thereof. In addition, the terms "include", "comprise", and "have" as well as variations thereof are intended to cover a non-exclusive inclusion. For example, a process, method, system, product, or device including a series of steps or units is not limited to the listed steps or units, and instead, it can optionally include other steps or units that are not listed or other steps or units inherent to the process, method, product, or device.

The term "embodiment" referred to in embodiments of the present disclosure means that a particular feature, structure, or characteristic described in conjunction with the embodiment may be contained in at least one embodiment of the present disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

The terms used in the following embodiments of the present disclosure are only for describing specific embodiments, and are not intended to limit the present disclosure. As used in the specification and the appended claims of the present disclosure, singular expressions such as "a/an", "one", "the", "above", "said", and "this" are intended to also include plural expressions, unless the context expressly indicates the contrary. It may also be understood that, the term "and/or" used in the present disclosure refers to including any possible combination or all possible combinations of one or more listed items. For example, *"A* and/or *B"* means three situations, that is, *A* alone, both *A* and *B,* or *B* alone, where *A* and *B* may be singular or plural. The terms "a plurality of" or "multiple" used in the present disclosure refer to two or more than two. In the illustration of the present disclosure, the character "/" generally indicates that the associated objects are in an "or" relationship. The term "at least one" used in the present disclosure refers to one or more.

A network architecture involved in the present disclosure will be illustrated in detail below.

Technical solutions provided in the present disclosure are applicable to various communication systems, such as a long-term evolution (LTE) system, an LTE frequency division duplex (FDD) system, an LTE time division duplex (TDD) system, a universal mobile telecommunication system (UMTS), a worldwide interoperability for microwave access (WiMAX) communication system, a fifth generation (5G) communication system or new radio (NR), other future communication systems such as a sixth generation (6G) system, etc. The communication system to which the technical solutions provided in the present disclosure are applicable includes at least two entities. One entity (e.g., a base station) can send a synchronization signal and/or a reference signal, and another entity (e.g., user equipment) can receive the synchronization signal and/or the reference signal. It may be understood that, the technical solutions provided in the present disclosure are applicable to any communication system including the at least two entities.

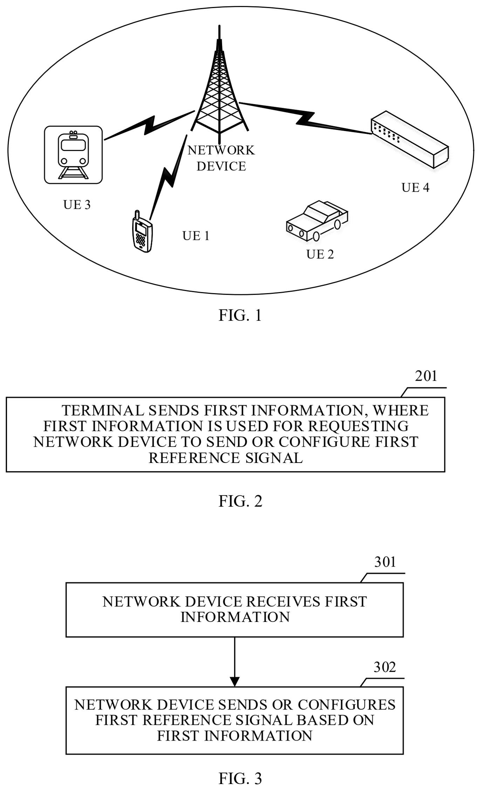

Reference may be made to FIG. 1, which is a schematic diagram of an architecture of a communication system provided in the present disclosure. As illustrated in FIG. 1, the communication system includes one or more network devices (e.g., base stations) and one or more user equipment (UE) connected with the network device(s). In FIG. 1, one network device and four UEs are illustrated as an example, that is, the four UEs are UE 1 to UE 4.

The network device may be a device that can communicate with a UE. The network device may be any device with a wireless transceiver function. The network device may be a base station, an access point (AP), a transmission reception point (TRP), or a device communicating with a UE through one or more cells through an air interface, which is not limited in the present disclosure. For example, the base station may be an evolved NodeB (eNB or eNodeB) in LTE, a relay station, an AP, a next generation NodeB (gNB) in a 5G network, etc. It can be understood that, the base station may also be a base station in a future evolved public land mobile network (PLMN), etc.

Optionally, the network device may also be an access node, a wireless relay node, a wireless backhaul node, and the like in a wireless fidelity (WiFi) system.

Optionally, the network device may also be a wireless controller in a cloud radio access network (CRAN) scenario.

For ease of description, the following will take a base station as an example to illustrate the network device involved in the present disclosure. Optionally, in some deployments of the base station, the base station may include a centralized unit (CU), a distributed unit (DU), etc. In other deployments of the base station, the CU may also be divided into a CU-control plane (CP) and a CU-user plane (UP). In other deployments of the base station, the base station may also be an open radio access network (ORAN) architecture, etc. The present disclosure does not limit the specific deployment of the base station.

The UE may be referred to as "terminal device" or "terminal". The UE of the present disclosure may be a device with a wireless transceiver function, and can communicate with one or more core network (CN) devices (or called "core device") through a network access device (or called "access device") in a radio access network (RAN). The UE can send an uplink signal to the network device and/or receive a downlink signal from the network device. The UE may include a mobile phone, a car, a tablet computer, a smart speaker, a train detector, a gas station, etc. Main functions of the UE include collecting data (certain UEs), receiving control information and downlink data from the network device, and sending uplink data to the network device. Optionally, the UE may also be called an access terminal, a terminal, a subscriber unit, a subscriber station, a mobile station, a remote station, a remote terminal, a mobile device, a user terminal, a wireless network device, a user agent, a user device, etc. Optionally, the UE may be deployed on land, including indoors or outdoors, and may be handheld or vehicle-mounted; the UE may also be deployed on water (e.g., a ship); the UE may also be deployed in the air (e.g., an aircraft, a balloon, or a satellite). Optionally, the UE may be a handheld device with a wireless communication function, a vehicle-mounted device, a wearable device, a terminal in the Internet of Things or the Internet of Vehicles, any form of terminal in a 5G network or a future network, etc. which is not limited in the present disclosure.

Optionally, in the communication system illustrated in FIG. 1, UEs may also communicate with each other through technologies such as device-to-device (D2D), vehicle-to-everything (V2X), or machine-to-machine (M2M), and the present disclosure does not limit the communication method between UEs.

In the communication system illustrated in FIG. 1, the network device and any UE can be configured to perform the method provided in embodiments of the present disclosure.

As mentioned above in the background, the 3GPP R18 is considering artificial intelligence (AI)/machine learning (ML)-enabled air interface technologies. For AI/ML-enabled air interface technologies, a network may be still required to configure resources for a terminal to perform measurement, to obtain a measurement result for AI/ML model input/output, AI/ML model performance monitoring, AI/ML model training/updating, etc. However, there is currently no specific solution for how to configure related resources. Embodiments of the present disclosure provide a communication solution in which the terminal actively requests the network device to send or configure a reference signal. In the communication solution provided in embodiments of the present disclosure, the network device may configure or send different reference signals or the same reference signal for different terminals, thereby meeting the requirements of different terminals for reference signals. The communication solution provided in embodiments of the present disclosure is illustrated below in conjunction with accompanying drawings.

FIG. 2 is a flowchart illustrating a communication method provided in embodiments of the present disclosure. As illustrated in FIG. 2, the method includes the following.

At 201, a terminal sends first information, where the first information is used for requesting a network device to send or configure a first reference signal.

In a possible embodiment, the first information includes request information, and the request information is used for requesting the network device to send or configure the first reference signal. In this embodiment, the first information includes the request information, such that the network device sends or configures the first reference signal based on the request information.

In a possible embodiment, the first information includes a reference signal resource identifier, and the reference signal resource identifier is used for identifying a resource for the first reference signal. In this embodiment, the first information includes the reference signal resource identifier, such that the network device sends or configures the first reference signal according to a resource identified by the reference signal resource identifier.

In a possible embodiment, the first information includes a reference signal port number, and the reference signal port number is the number of ports for the first reference signal. In this embodiment, the first information includes the reference signal port number, such that the network device configures or sends the first reference signal according to the reference signal port number.

In a possible embodiment, the first information includes window length information, and the window length information indicates a length of a transmission window for the first reference signal expected by the terminal. In this embodiment, the first information includes window length information, such that the network device sends or configures the first reference signal according to the length of the transmission window indicated by the window length information.

It may be noted that the first information may also include other information for defining the first reference signal, which is not limited in embodiments of the present disclosure. For example, the first information also includes period information, where the period information indicates a period at which the network device sends the first reference signal. For another example, the first information also includes validity period information, where the validity period information indicates a validity period for the first reference signal configured by the network device, such as 1 hour, 1 day, 1 week, etc. After the first reference signal exceeds its validity period, a configuration corresponding to the first reference signal by the network device becomes invalid.

The terminal sends the first information, which may mean that the terminal sends the first information to the network device. Correspondingly, the network device receives the first information.

In a possible embodiment, the terminal sends the first information through a physical random access channel (PRACH). In this embodiment, the first information is sent through the PRACH, and there is no need to request the network device to schedule resources, thereby saving signalling overhead.

In a possible embodiment, the terminal sends the first information to the network device at an RACH occasion (RO) of the PRACH, where the RO is configured by the network device or specified by the protocol for a function, i.e., the terminal sends information, such as the first information, for requesting the network device to send or configure the reference signal. In this embodiment, the RO is configured by the network device or specified by the protocol for the function, thereby preventing the occupancy of other ROs and the need for additional resources for sending the first information.

In a possible embodiment, the first information is carried in a message containing a preamble, where the preamble is configured by the network device or specified by the protocol for the function, that is, the terminal sends the information, such as the first information, for requesting the network device to send or configure the reference signal. In this embodiment, the preamble is configured by the network device or specified by the protocol for the function.

In a possible embodiment, the first information is contained in message A (MsgA). Optionally, the first information is carried on a physical uplink shared channel (PUSCH) of MsgA. In this embodiment, the first information is contained in MsgA, and there is no need to request the network device to schedule resources, thereby saving signalling overhead.

In a possible embodiment, the terminal sends the first information through a physical uplink control channel (PUCCH). Optionally, PUCCH resources occupied by the first information are configured by the network device or specified by the protocol for the function, that is, the terminal sends the information, such as the first information, for requesting the network device to send or configure the reference signal. Optionally, medium access control control element (MAC CE) information carried by the PUCCH resources occupied by the PUCCH contains the first information. Optionally, the PUCCH resources occupied by the PUCCH carry the first information.

In a possible embodiment, the terminal sends the first information through the PUSCH.

Optionally, PUSCH resources occupied by the PUSCH are configured by the network device or specified by the protocol for the function, that is, the terminal sends the information, such as the first information, for requesting the network device to send or configure the reference signal.

Optionally, the PUSCH resources occupied by the PUSCH are network-configured grant-free (configured grant (CG)) PUSCH resources.

Optionally, the MAC CE information carried by the PUSCH resources occupied by the PUSCH contains the first information.

Optionally, the PUSCH resources occupied by the PUSCH carry the first information.

In a possible embodiment, the first information is contained in the MAC CE information.

In a possible embodiment, before the terminal sends the first information, the terminal sends a scheduling request (SR) through the PUCCH. The terminal sends the first information based on PUSCH resources scheduled by the network device.

It may be noted that, the above only illustrates some of, rather than all of, possible manners for the terminal to send the first information, which are not listed one by one herein. It may be understood that, other manners for the terminal to send the first information also fall on the protection scope of the present disclosure.

In embodiments of the present disclosure, the first information used for requesting the network device to send the first reference signal is sent, such that it is possible to actively request the network device to send the first reference signal. In this way, compared with passively receiving a reference signal sent by the network device, a required reference signal can be obtained more timely, instead of passively waiting for transmission from the network device. The first information used for requesting the network device to send the first reference signal is sent, such that the network device can configure the first reference signal according to the first information, thereby more flexibly meeting the needs of different terminals.

FIG. 3 is a flowchart illustrating another communication method provided in embodiments of the present disclosure. As illustrated in FIG. 3, the method includes the following.

At 301, a network device receives first information.

The first information is used for requesting the network device to send or configure a first reference signal.

In a possible embodiment, the first information includes request information, and the request information is used for requesting the network device to send or configure the first reference signal. In this embodiment, the first information includes the request information, such that the network device sends or configures the first reference signal based on the request information.

In a possible embodiment, the first information includes a reference signal resource identifier, and the reference signal resource identifier is used for identifying a resource for the first reference signal. In this embodiment, the first information includes the reference signal resource identifier, such that the network device sends or configures the first reference signal according to a resource identified by the reference signal resource identifier.

In a possible embodiment, the first information includes a reference signal port number, and the reference signal port number is the number of ports for the first reference signal. In this embodiment, the first information includes the reference signal port number, such that the network device configures or sends the first reference signal according to the reference signal port number.

In a possible embodiment, the first information includes window length information, and the window length information indicates a length of a transmission window for the first reference signal expected by a terminal. In this embodiment, the first information includes window length information, such that the network device sends or configures the first reference signal according to the length of the transmission window indicated by the window length information.

It may be noted that the first information may also include other information defining the first reference signal, which is not limited in embodiments of the present disclosure. For example, the first information also includes period information, where the period information indicates a period at which the network device sends the first reference signal. For another example, the first information also includes validity period information, where the validity period information indicates a validity period for the first reference signal configured by the network device, such as 1 hour, 1 day, 1 week, etc. After the first reference signal exceeds its validity period, a configuration corresponding to the first reference signal by the network device becomes invalid.

At 302, the network device sends or configures the first reference signal based on the first information.

The operations at 302 are optional but not necessary. For example, when a resource for the first reference signal requested by the first information is occupied, the network device will not configure the first reference signal based on the first information. For another example, when the network device has received the first information for requesting to send the first reference signal, if the network device currently does not have sufficient resources to send the first reference signal, the network device will not send the first reference signal based on the first information. It may be understandable that, after the network device receives the first information, the network device may send or configure the first reference signal based on the first information, or the network device may not send or configure the first reference signal based on the first information.

The first reference signal is sent based on the first information, which may mean that the network device sends the first reference signal according to a request from the terminal. That is to say, the terminal can actively request the network device to send the terminal a reference signal requested by the terminal. In addition, different terminals can request the network device to send them different reference signals or different reference signals. It may be understood that, each terminal is independent, and the reference signals that different terminals request the network device to send them may be the same or different. For example, configurations and/or resources for the reference signals sent by the network device to different terminals are different. For example, terminal 1 sends information 1 to the network device, where information 1 is used for requesting the network device to send reference signal 1 to terminal 1; terminal 2 sends information 2 to the network device, where information 2 is used for requesting the network device to send reference signal 2 to terminal 2; and reference signal 1 is different from reference signal 2 in at least one of the number of ports, the length of the transmission window, or an occupied resource.

The first reference signal is configured based on the first information, which may mean that the network device configures the reference signal according to the request from the terminal. That is to say, the terminal can request the network device to configure a reference signal for it. In addition, different terminals can request the network device to configure different reference signals or the same reference signal for them. For example, the network device may configure different resources, different numbers of ports, or different lengths of transmission windows for reference signals for different terminals. For example, terminal 1 sends information 3 to the network device, where information 3 is used for requesting the network device to configure reference signal 1 for terminal 1; terminal 2 sends information 4 to the network device, where information 4 is used for requesting the network device to configure reference signal 2 for terminal 2; and reference signal 1 is different from reference signal 2 in at least one of the number of ports, the length of the transmission window, or an occupied resource.

In a possible embodiment, the first information is used for configuring the first reference signal, and the number of ports for the first reference signal is greater than 2.

In a possible embodiment, the first information is used for configuring the first reference signal, the first reference signal is a channel state information-reference signal (CSI-RS) or a synchronization signal block (SSB), and the first reference signal is not associated with a CSI report configuration.

In a possible embodiment, the first information is used for configuring the first reference signal, the first reference signal is a CSI-RS or an SSB, and the first reference signal is associated with a CSI report configuration. A report quantity in the CSI report configuration is configured as none or a target identifier. The target identifier indicates that a measurement result reported by a terminal is required to contain indication information. The indication information indicates model update, model deactivation, model activation, model switching, or model fallback.

It may be noted that, the first information may also be used for configuring other contents for the reference signal, such as the resource, the length of transmission window, etc., which are not limited in embodiments of the present disclosure.

In embodiments of the present disclosure, the first reference signal is sent or configured based on the first information, such that reference signals can be specifically sent to or configured for different terminals, thereby more flexibly meeting the needs of different terminals.

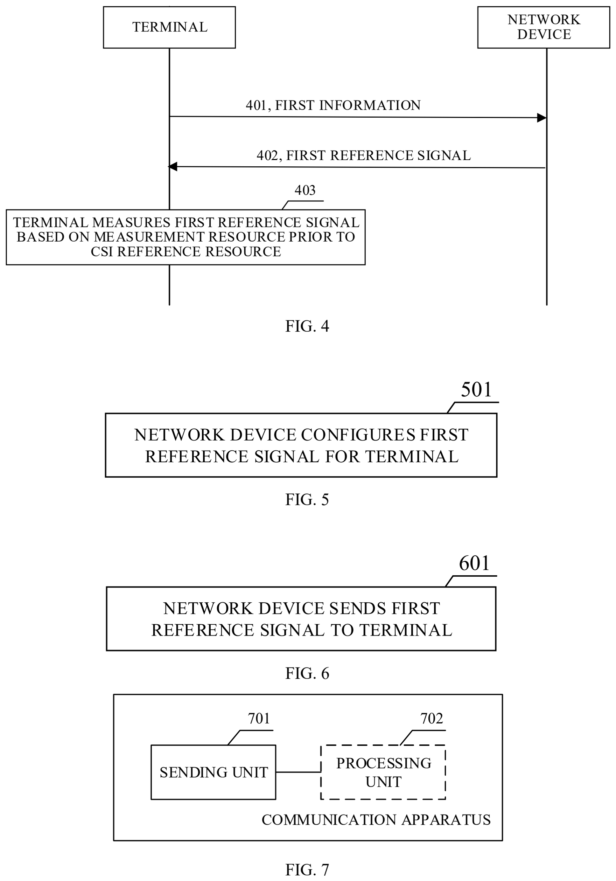

FIG. 4 is an interaction flowchart illustrating a communication method provided in embodiments of the present disclosure. As illustrated in FIG. 4, the method includes the following.

At 401, a terminal sends first information to a network device.

For the operations at 401, reference may be made to the operations at 201. Correspondingly, the network device receives the first information from the terminal.

At 402, the network device sends a first reference signal to the terminal based on the first information.

The first information is used for requesting the network device to send the first reference signal. Optionally, before the network device sends the first reference signal based on the first information, the network device can configure the first reference signal based on the first information.

At 403, the terminal measures the first reference signal based on a measurement resource prior to a CSI reference resource.

In embodiments of the present disclosure, the first reference signal is sent based on the first information, such that reference signals can be specifically sent to or configured for different terminals, thereby more flexibly meeting the needs of different terminals.

FIG. 5 is a flowchart illustrating another communication method provided in embodiments of the present disclosure. As illustrated in FIG. 5, the method includes the following.

At 501, a network device configures a first reference signal for a terminal.

The number of ports for the first reference signal is greater than 2. The first reference signal is not associated with a CSI report configuration. Alternatively, the first reference signal is associated with the CSI report configuration. A report quantity in the CSI report configuration is configured as none or a target identifier. The target identifier indicates that a measurement result reported by the terminal is required to contain indication information. The indication information indicates model update, model deactivation, model activation, model switching, or model fallback.

In a possible embodiment, the network device configures different reference signals for different terminals. For example, the network device configures the first reference signal for the terminal according to transmission power, location, etc., of the terminal.

In a possible embodiment, before the network device configures the first reference signal for the terminal, the network device receives first information, where the first information is used for requesting the network device to configure the first reference signal for the terminal.

In a possible embodiment, after the network device configures the first reference signal for the terminal, the network device sends the first reference signal.

In embodiments of the present disclosure, the first reference signal is configured for the terminal. Reference signals are specifically configured for different terminals, thereby more flexibly meeting the needs of different terminals.

FIG. 6 is a flowchart illustrating another communication method provided in embodiments of the present disclosure. As illustrated in FIG. 6, the method includes the following.

At 601, a network device sends a first reference signal to a terminal.

The number of ports for the first reference signal is greater than 2. The first reference signal is not associated with a CSI report configuration. Alternatively, the first reference signal is associated with the CSI report configuration. A report quantity in the CSI report configuration is configured as none or a target identifier. The target identifier indicates that a measurement result reported by the terminal is required to contain indication information. The indication information indicates model update, model deactivation, model activation, model switching, or model fallback. The reference signal is used for a measurement by the terminal. The first reference signal is configured for the terminal, which may mean that the network device configures the first reference signal for the terminal. In embodiments of the present disclosure, the network device may send different reference signals or the same reference signal to different terminals, to meet the requirements of different terminals for reference signals.

In a possible embodiment, before the network device sends the first reference signal to the terminal, the network device receives first information, where the first information is used for requesting the network device to send the first reference signal to the terminal.

In embodiments of the present disclosure, the first reference signal is sent to the terminal, and different reference signals or the same reference signal may be sent to different terminals, thereby more flexibly meeting the needs of different terminals.

The following will introduce the communication apparatus provided in embodiments of the present disclosure.

FIG. 7 is a schematic structural diagram illustrating a communication apparatus provided in embodiments of the present disclosure. The communication apparatus can be configured to perform the operations performed by the terminal in the foregoing method embodiments. For example, the communication apparatus can be configured to execute the method executed by the terminal illustrated in FIG. 2 and FIG. 4. As illustrated in FIG. 7, the communication apparatus includes a sending unit 701. The sending unit 701 is configured to send first information, where the first information is used for requesting a network device to send or configure a first reference signal.

In a possible embodiment, the communication apparatus further includes a processing unit 702. The processing unit 702 is configured to generate the first information.

In some possible embodiments, the communication apparatus in FIG. 7 can correspondingly implement the operations and functions of the terminal in the method embodiments. For example, the communication apparatus may be a terminal, or may be a component (e.g., a chip or circuit) applicable to the terminal.

In a possible embodiment, the sending unit 701 is specifically configured to send the first information through a PRACH.

In a possible embodiment, the sending unit 701 is specifically configured to send the first information at an RO of the PRACH, where the RO is configured by the network device or specified by the protocol for a function, i.e., the terminal sends information, such as the first information, for requesting the network device to send or configure the reference signal.

In a possible embodiment, the sending unit 701 is specifically configured to send the first information through a PUCCH.

Optionally, PUCCH resources occupied by the first information are configured by the network device or specified by the protocol for the function, that is, the terminal sends the information, such as the first information, for requesting the network device to send or configure the reference signal.

Optionally, MAC CE information carried by the PUCCH resources occupied by the PUCCH contains the first information.

Optionally, the PUCCH resources occupied by the PUCCH carry the first information.

In a possible embodiment, the sending unit 701 is specifically configured to send the first information through a PUSCH.

Optionally, PUSCH resources occupied by the PUSCH are configured by the network device or specified by the protocol for the function, that is, the terminal sends the information, such as the first information, for requesting the network device to send or configure the reference signal.

Optionally, MAC CE information carried by the PUSCH resources occupied by the PUSCH contains the first information.

Optionally, the PUSCH resources occupied by the PUSCH carry the first information.

In a possible embodiment, the sending unit 701 is further configured to send an SR through the PUCCH. The sending unit 701 is specifically configured to send the first information based on PUSCH resources scheduled by the network device.

In a possible embodiment, the number of ports for the first reference signal is greater than 2.

In a possible embodiment, the first reference signal is a CSI-RS or an SSB, and the first reference signal is not associated with a CSI report configuration. The first reference signal may also be other reference signals, which are not limited in the present disclosure.

In a possible embodiment, the first reference signal is the CSI-RS or the SSB, and the first reference signal is associated with the CSI report configuration. A report quantity (e.g., reportQuantity) in the CSI report configuration is configured as none or a target identifier. The target identifier indicates that a measurement result reported by a terminal is required to contain indication information. The indication information indicates model update, model deactivation, model activation, model switching, or model fallback. The target identifier may be *R, T, S, W,* etc., which is not limited in the present disclosure.

In a possible embodiment, the processing unit 702 is further configured to perform measurement based on a measurement resource prior to a CSI reference resource.

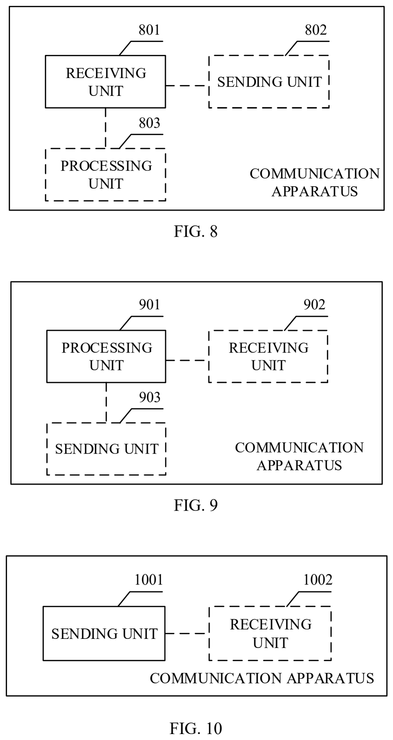

FIG. 8 is a schematic structural diagram of another communication apparatus provided in embodiments of the present disclosure. The communication apparatus can be configured to perform the operations performed by the network device in the foregoing method embodiments. For example, the communication apparatus can be configured to execute the method executed by the network device illustrated in FIG. 3, FIG. 4, FIG. 5, and FIG. 6. As illustrated in FIG. 8, the communication apparatus includes a receiving unit 801. The receiving unit 801 is configured to receive first information, where the first information is used for requesting a network device to send or configure a first reference signal.

In some possible embodiments, the communication apparatus in FIG. 8 can correspondingly implement the operations and functions of the network device in the method embodiments. For example, the communication apparatus may be a network device, or may be a component (e.g., a chip or circuit) applicable to the network device.

In a possible embodiment, the communication apparatus further includes a sending unit 802. The sending unit 802 is configured to send the first reference signal based on the first information.

In a possible embodiment, the communication apparatus further includes a processing unit 803. The processing unit 803 is configured to configure the first reference signal based on the first information.

In a possible embodiment, the first information is used for configuring the first reference signal, and the number of ports for the first reference signal is greater than 2.

In a possible embodiment, the first information is used for configuring the first reference signal, the first reference signal is a CSI-RS or an SSB, and the first reference signal is not associated with a CSI report configuration.

In a possible embodiment, the first information is used for configuring the first reference signal, the first reference signal is a CSI-RS or an SSB, and the first reference signal is associated with a CSI report configuration. A report quantity in the CSI report configuration is configured as none or a target identifier. The target identifier indicates that a measurement result reported by a terminal is required to contain indication information. The indication information indicates model update, model deactivation, model activation, model switching, or model fallback.

FIG. 9 is a schematic structural diagram of another communication apparatus provided in embodiments of the present disclosure. The communication apparatus can be configured to perform the operations performed by the network device in the foregoing method embodiments. For example, the communication apparatus can be configured to execute the method executed by the network device illustrated in FIG. 3, FIG. 4, FIG. 5, and FIG. 6. As illustrated in FIG. 9, the communication apparatus includes a processing unit 901. The processing unit 901 is configured to configure a first reference signal for a terminal, and the number of ports for the first reference signal is greater than 2. The first reference signal is not associated with a CSI report configuration. Alternatively, the first reference signal is associated with the CSI report configuration. A report quantity in the CSI report configuration is configured as none or a target identifier. The target identifier indicates that a measurement result reported by the terminal is required to contain indication information. The indication information indicates model update, model deactivation, model activation, model switching, or model fallback. The reference signal is used for a measurement by the terminal. The first reference signal is configured for the terminal, which may mean that the network device configures the first reference signal for the terminal. The first reference signal is configured for the terminal, which may also mean that the terminal is configured with the first reference signal. In embodiments of the present disclosure, the network device may configure different reference signals or the same reference signal for different terminals, to meet the requirements of different terminals for reference signals.

In some possible embodiments, the communication apparatus in FIG. 9 can correspondingly implement the operations and functions of the network device in the method embodiments. For example, the communication apparatus may be a network device, or may be a component (e.g., a chip or circuit) applicable to the network device.

In a possible embodiment, the communication apparatus further includes a receiving unit 902. The receiving unit 902 is configured to receive first information, where the first information is used for requesting the network device to configure the first reference signal for the terminal.

In a possible embodiment, the communication apparatus further includes a sending unit 903. The sending unit 903 is further configured to send the first reference signal.

FIG. 10 is a schematic structural diagram of another communication apparatus provided in embodiments of the present disclosure. The communication apparatus can be configured to perform the operations performed by the network device in the foregoing method embodiments. For example, the communication apparatus can be configured to execute the method executed by the network device illustrated in FIG. 3, FIG. 4, FIG. 5, and FIG. 6. As illustrated in FIG. 10, the communication apparatus includes a sending unit 1001. The sending unit 1001 is configured to send a first reference signal to a terminal, and the number of ports for the first reference signal is greater than 2. The first reference signal is not associated with a CSI report configuration. Alternatively, the first reference signal is associated with the CSI report configuration. A report quantity in the CSI report configuration is configured as none or a target identifier. The target identifier indicates that a measurement result reported by the terminal is required to contain indication information. The indication information indicates model update, model deactivation, model activation, model switching, or model fallback. The reference signal is used for a measurement by the terminal. The first reference signal is configured for the terminal, which may mean that a network device configures the first reference signal for the terminal.

In some possible embodiments, the communication apparatus in FIG. 10 can correspondingly implement the operations and functions of the network device in the method embodiments. For example, the communication apparatus may be a network device, or may be a component (e.g., a chip or circuit) applicable to the network device.

In a possible embodiment, the communication apparatus further includes a receiving unit 1002. The receiving unit 1002 is configured to receive first information, where the first information is used for requesting the network device to send the first reference signal for the terminal.

It may be understood that, in order to implement the above functions in embodiment of the present disclosure, the base station and the terminal include hardware structures and/or software modules for performing respective functions. Those of ordinary skill in the art will appreciate that units and algorithmic operations of various examples described in connection with embodiments of the present disclosure can be implemented by hardware or by a combination of hardware and computer software in the present disclosure. Whether these functions are performed by means of hardware or hardware driven by computer software depends on the particular application and the design constraints of the associated technical solution.

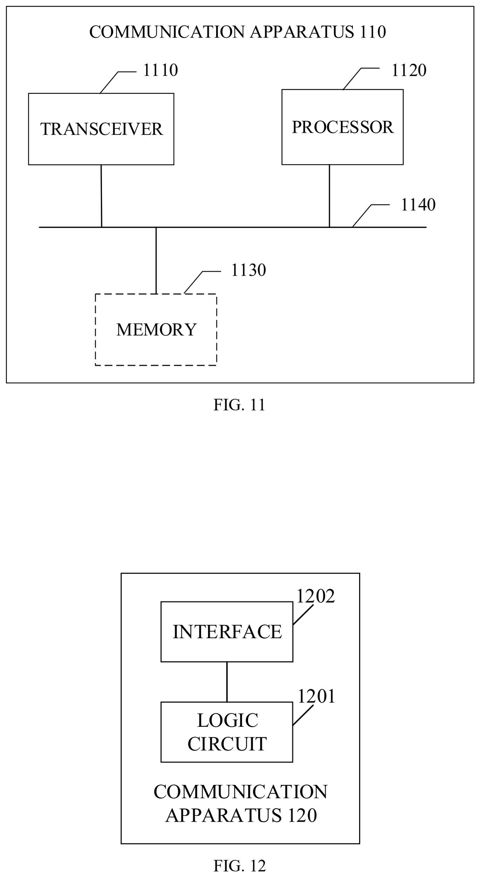

FIG. 11 is a schematic structural diagram of another communication apparatus 110 provided in embodiments of the present disclosure. The communication apparatus in FIG. 11 may be the terminal. The communication apparatus in FIG. 11 may be the network device.

As illustrated in FIG. 11, the communication apparatus 110 includes at least one processor 1120 and a transceiver 1110.

In some embodiments of the present disclosure, the processor 1120 and the transceiver 1110 can be configured to implement the functions or operations performed by the terminal.

In other embodiments of the present disclosure, the processor 1120 and the transceiver 1110 can be configured to implement the functions or operations performed by the network device.

The transceiver 1110 is configured to communicate with other devices/apparatuses through transmission media. The processor 1120 sends and receives data and/or signalling with the transceiver 1110, and is configured to implement the method in the foregoing method embodiments. The transceiver may be configured to perform transmitting and receiving operations performed by the terminal. Alternatively, the transceiver may be configured to perform transmitting and receiving operations performed by the network device. The processor 1120 may be configured to perform operations other than transmitting and receiving operations.

Optionally, the communication apparatus 110 further includes at least one memory 1130. The memory 1130 is used to store program instructions and/or data. The memory 1130 and the processor 1120 are coupled with each other. The coupling of embodiments of the present disclosure may be indirect coupling or communication connection between devices, units, or modules, may be in the form of electrical, mechanical, etc., and is used for information exchange between devices, units, or modules. The processor 1120 may cooperate with the memory 1130. The processor 1120 can execute program instructions stored in the memory 1130. At least one of the at least one memory may be contained in the processor.

The specific connection media among the transceiver 1110, the processor 1120, and the memory 1130 is not limited in embodiments of the present disclosure. In embodiments of the present disclosure, in FIG. 11, the memory 1130, the processor 1120, and the transceiver 1110 are connected through a bus 1140. The bus is represented by a thick line in FIG. 11. The connection among other components is merely illustrative and not limited herein. The bus may include an address bus, a data bus, a control bus, etc. For ease of representation, only one thick line is used in FIG. 11, but it does not mean that there is only one bus or one type of bus.

In embodiments of the present disclosure, the processor may be a general-purpose processor, a digital signal processor, an application-specific integrated circuit, a field-programmable gate array or other programmable logic devices, a discrete gate or a transistor logic device, a discrete hardware component, etc. The processor can implement or perform the methods, operations, and logic blocks disclosed in embodiments of the present disclosure. The general-purpose processor may be a microprocessor or any conventional processor. The operations of the method disclosed in embodiments of the present disclosure may be directly performed by a hardware processor, or performed by a combination of hardware and software modules in the processor.

FIG. 12 is a schematic structural diagram of another communication apparatus 120 provided in embodiments of the present disclosure. As illustrated in FIG. 12, the communication apparatus includes a logic circuit 1201 and an interface 1202. The processing module in FIG. 7 to FIG. 10 can be implemented using the logic circuit 1201, and the transceiver module in FIG. 7 to FIG. 10 can be implemented using interface 1202. The logic circuit 1201 may be a chip, a processing circuit, an integrated circuit, or system on chip (SoC), etc. The interface 1202 may be a communication interface, input/output interface, etc. In embodiments of the present disclosure, the logic circuit and the interface can also be coupled with each other. The specific connection of the logic circuit and the interface is not limited in embodiments of the present disclosure.

In some embodiments of the present disclosure, the logic circuit and the interface may be configured to implement the functions or operations performed by the terminal.

In other embodiments of the present disclosure, the logic circuit and the interface may be configured to implement the functions or operations performed by the network device.

The present disclosure further provides a computer-readable storage medium. The computer-readable storage medium is configured to store computer codes which, when run on a computer, cause the computer to perform the method in the foregoing embodiments.

The present disclosure further provides a computer program product. The computer program product includes computer codes or computer programs which, when run on a computer, are operable to perform the communication method in the foregoing embodiments.

The present disclosure further provides a communication system. The communication system includes the terminal and the network device.

The present disclosure further provides a chip. The chip includes a communication interface and a processor. The communication interface is configured to transmit and receive signals of the chip. The processor is configured to execute computer program instructions, to cause a communication apparatus equipped with the chip to perform the method in the foregoing embodiments.

The above merely depicts some exemplary embodiments of the present disclosure, but the protection scope of the present disclosure is not limited to these exemplary embodiments. Any easily thought of changes or equivalent substitutions made by those of ordinary skill in the art without departing from the scope of technology of the present disclosure shall be encompassed within the protection scope of the present disclosure. Therefore, the protection scope of the present disclosure shall be based on the scope of the appended claims.

## Claims

1. A communication method, comprising:
sending first information, wherein the first information is used for requesting a network device to send or configure a first reference signal.

2. The method of claim 1, wherein the first information comprises request information, and the request information is used for requesting the network device to send or configure the first reference signal.

3. The method of claim 1, wherein the first information comprises a reference signal resource identifier, and the reference signal resource identifier is used for identifying a resource for the first reference signal.

4. The method of claim 1, wherein the first information comprises a reference signal port number, and the reference signal port number is a number of ports for the first reference signal.

5. The method of claim 1, wherein the first information comprises window length information, and the window length information indicates a length of a transmission window for the first reference signal expected by a terminal.

6. The method of any one of claims 1 to 5, wherein sending the first information comprises:
sending the first information through a physical random access channel (PRACH).

7. The method of any one of claims 1 to 5, wherein the first information is contained in message A (MsgA).

8. The method of any one of claims 1 to 5, wherein sending the first information comprises:
sending the first information through a physical uplink control channel (PUCCH).

9. The method of any one of claims 1 to 5, wherein sending the first information comprises:
sending the first information through a physical uplink shared channel (PUSCH).

10. The method of claim 8 or 9, wherein the first information is contained in medium access control control element (MAC CE) information.

11. The method of any one of claims 1 to 5, wherein before sending the first information, the method comprises:
sending a scheduling request (SR) through a PUCCH; and
sending the first information comprises:
sending the first information based on PUSCH resources scheduled by the network device.

12. The method of any one of claims 1 to 11, wherein a number of ports for the first reference signal is greater than 2.

13. The method of any one of claims 1 to 12, wherein the first reference signal is a channel state information-reference signal (CSI-RS) or a synchronization signal block (SSB), and the first reference signal is not associated with a CSI report configuration.

14. The method of any one of claims 1 to 12, wherein the first reference signal is a CSI-RS or an SSB, the first reference signal is associated with a CSI report configuration, a report quantity in the CSI report configuration is configured as none or a target identifier, the target identifier indicates that a measurement result reported by a terminal is required to contain indication information, and the indication information indicates model update, model deactivation, model switching, model activation, or model fallback.

15. The method of claim 14, further comprising:
performing measurement based on a measurement resource prior to a CSI reference resource.

16. A communication method, comprising:
receiving first information, wherein the first information is used for requesting a network device to send or configure a first reference signal.

17. The method of claim 16, wherein the first information is used for configuring the first reference signal, and a number of ports for the first reference signal is greater than 2.

18. The method of claim 16, wherein the first information is used for configuring the first reference signal, the first reference signal is a channel state information-reference signal (CSI-RS) or a synchronization signal block (SSB), and the first reference signal is not associated with a CSI report configuration.

19. The method of claim 16, wherein the first information is used for configuring the first reference signal, the first reference signal is a CSI-RS or an SSB, the first reference signal is associated with a CSI report configuration, a report quantity in the CSI report configuration is configured as none or a target identifier, the target identifier indicates that a measurement result reported by a terminal is required to contain indication information, and the indication information indicates model update, model deactivation, model switching, model fallback, or model activation.

20. The method of any one of claims 16 to 19, wherein the first information comprises at least one of request information, a reference signal resource identifier, or a reference signal port number, wherein the request information is used for requesting the network device to send or configure the first reference signal, the reference signal resource identifier is used for identifying a resource for the first reference signal, and the reference signal port number is a number of ports for the first reference signal.

21. The method of any one of claims 16 to 20, wherein the first information comprises window length information, and the window length information indicates a length of a transmission window for the first reference signal expected by a terminal.

22. A communication apparatus, comprising a module or a unit configured to implement the method of any one of claims 1 to 15.

23. A communication apparatus, comprising a module or a unit configured to implement the method of any one of claims 16 to 21.

24. A computer-readable storage medium being configured to store a computer program, and the computer program comprising program instructions which, when executed by a processor, cause the processor to perform the method of any one of claims 1 to 15 or the method of any one of claims 16 to 21.

25. A communication apparatus, comprising:
a memory configured to store instructions; and
a processor coupled to the memory and configured to execute the instructions, to cause the communication apparatus to perform the method of any one of claims 1 to 15, or to cause the communication apparatus to perform the method of any one of claims 16 to 21.

26. A chip, comprising:
a communication interface; and
a processor configured to read, through the communication interface, instructions stored in a memory, to perform the method of any one of claims 1 to 15 or 16 to 21.

27. A communication apparatus, comprising:
an interface circuit configured to obtain data or output data; and
a processing circuit configured to perform the method of any one of claims 1 to 15 or 16 to 21.
